# EUROPEAN PATENT APPLICATION

(11) **EP 2 826 750 A1**
(43) Date of publication of application: **21.01.2015**
(21) Application number: 13760854.3
(22) Date of filing: 14.03.2013
(51) Int. Cl.: C01G 53/00, H01M 4/36, H01M 4/505, H01M 4/525

(54) **LITHIUM COMPOSITE OXIDE PARTICLE POWDER FOR NON-AQUEOUS ELECTROLYTE SECONDARY BATTERY AND METHOD FOR PRODUCING SAME, AND NON-AQUEOUS ELECTROLYTE SECONDARY BATTERY**

(30) Priority: 15.03.2012 JP 2012059327
(71) Applicant: Toda Kogyo Corporation, Hiroshima 732-0828 (JP)
(72) Inventor: YAMAZAKI, Minoru, Onoda-shi Yamaguchi 756-0847 (JP); SASAKI, Osamu, Onoda-shi Yamaguchi 756-0847 (JP); FUJINO, Shoichi, Onoda-shi Yamaguchi 756-0847 (JP); MITSUI, Hideharu, Onoda-shi Yamaguchi 756-0847 (JP); YAMAMURA, Takayuki, Onoda-shi Yamaguchi 756-0847 (JP); URAMATSU, Kunihiro, Onoda-shi Yamaguchi 756-0847 (JP); KAJIYAMA, Akihisa, Onoda-shi Yamaguchi 756-0847 (JP); MASAKI, Ryuta, Onoda-shi Yamaguchi 756-0847 (JP)
(74) Representative: Raynor, Stuart Andrew
(86) International application number: PCT/JP2013/057150
(87) International publication number: WO 2013/137380

(57) **Abstract**

The present invention relates to lithium composite oxide particles which can be produced by mixing nickel-cobalt-manganese-based compound particles, a zirconium raw material and a lithium raw material with each other and then calcining the resulting mixture, and comprise a Zr compound that is allowed to be present on a surface thereof, in which the Zr compound is represented by the chemical formula:

Liₓ(Zr_{1-y}A_{y})O_{z}

wherein x, y and z are 2.0 ≤ x ≤ 8.0; 0 ≤ y ≤ 1.0; and 2.0 ≤ z ≤ 6.0, respectively, and
a content of Zr in the lithium composite oxide particles is 0.05 to 1.0% by weight.

By using the lithium composite oxide particles as a positive electrode active substance, it is possible to produce a lithium ion secondary battery that has a low electric resistance at a high temperature, and is excellent in cycle characteristic at a high temperature as well as high-temperature rate characteristic.

## Description

### TECHNICAL FIELD

The present invention relates to lithium composite oxide particles that provide a low electric resistance at a high temperature and is excellent in cycle performance at a high temperature as well as high-temperature rate performance.

### BACKGROUND ART

With the recent rapid development of portable and cordless electronic devices such as audio-visual (AV) devices and personal computers, there is an increasing demand for secondary batteries having a small size, a light weight and a high energy density as a power source for driving these electronic devices. Under these circumstances, the lithium ion secondary batteries having advantages such as a high charge/discharge voltage and a large charge/discharge capacity have been noticed.

Hitherto, as positive electrode active substances useful for high energy-type lithium ion secondary batteries exhibiting a 4 V-grade voltage, there are generally known LiMn₂O₄ having a spinel structure, LiMnO₂ having a zigzag layer structure, LiCoO₂, LiCO₁₋ₓNiₓO₂ and LiNiO₂ having a layer rock-salt structure, or the like. Among the secondary batteries using these positive electrode active substances, lithium ion secondary batteries using LiCoO₂ are excellent in view of a high charge/discharge voltage and a large charge/discharge capacity thereof. However, owing to use of the expensive Co, various other positive electrode active substances have been studied as alternative substances of LiCoO₂.

On the other hand, lithium ion secondary batteries using LiNiO₂ have also been noticed because they have a high charge/discharge capacity. However, since the material LiNiO₂ tends to be inferior in thermal stability and charge/discharge cycle durability, further improvements of properties thereof have been required.

Specifically, when lithium is released from LiNiO₂, the crystal structure of LiNiO₂ distorted by Jahn-Teller distortion since Ni³⁺ is converted into Ni⁴⁺. When the amount of Li released reaches 0.45, the crystal structure of such a lithium-released region of LiNiO₂ is transformed from hexagonal system into monoclinic system, and a further release of lithium therefrom causes transformation of the crystal structure from monoclinic system into hexagonal system. Therefore, when the charge/discharge reaction is repeated, the crystal structure of LiNiO₂ tends to become unstable, so that the resulting secondary battery tends to be deteriorated in cycle characteristic or suffer from occurrence of undesired reaction between LiNiO₂ and an electrolyte solution owing to release of oxygen therefrom, resulting in deterioration in thermal stability and storage characteristics of the battery. To solve these problems, various studies have been made on the LiNiO₂ materials to which Co, Al, Mn, Ti, etc., are added by substituting a part of Ni in LiNiO₂ therewith.

That is, by substituting a part of Ni in LiNiO₂ with different kinds of elements, it is possible to impart properties inherent to the respective substituting elements to the LiNiO₂. For example, in the case where a part of Ni in LiNiO₂ is substituted with Co, it is expected that the thus substituted LiNiO₂ exhibits a high charge/discharge voltage and a large charge/discharge capacity even when the amount of Co substituted is small. On the other hand, LiMn₂O₄ provides a stable system relative to LiNiO₂ or LiCoO₂, but has a different crystal structure, so that the amounts of the substituting elements introduced thereto are limited.

In consequence, in order to obtain Co- or Mn-substituted LiNiO₂ having a high packing property and a stable crystal structure, it is required to use a nickel-cobalt-manganese-based precursor that is well controlled in composition, properties, crystallinity and particle size distribution.

On the other hand, for the market of recent electric cars, etc., there is an increasing demand for secondary batteries having a higher stability and a longer life even when used under severe environmental conditions such as a still higher temperature condition. That is, it has been required that the secondary batteries are excellent in cycle characteristic at a high temperature as well as high-temperature rate characteristic.

It is conventionally known that lithium composite oxide particles can be improved in cycle characteristic, etc., by adding different kinds of metals thereto (Patent Literatures 1 to 5).

### CITATION LIST

### Patent Literature

Patent Literature 1: International Patent Application (PCT) Laid-Open No. WO 2007/102407
Patent Literature 2: Japanese Patent Application Laid-Open (KOKAI) No. 2006-12616
Patent Literature 3: Japanese Patent Application Laid-Open (KOKAI) No. 2006-253140
Patent Literature 4: Published Japanese Translation of International Patent Application (KOHYO) No. 2010-535699
Patent Literature 5: International Patent Application (PCT) Laid-Open No. WO 2007/052712

### SUMMARY OF INVENTION

### PROBLEM TO BE SOLVED BY THE INVENTION

At present, it has been strongly required to provide lithium composite oxide particles capable of satisfying the above requirements. However, such lithium composite oxide particles have not been obtained until now.

In the method of adding Zr upon a production reaction of a precursor of the lithium composite oxide particles as described in the aforementioned Patent Literatures 1, 2, 3 and 4, when Zr is uniformly distributed in the lithium composite oxide particles, it may be difficult to attain a sufficient surface modifying effect of the particles. Since Zr is not substituted inside of a crystal structure of the lithium composite oxide particles, a crystallinity of the lithium composite oxide particles tends to be low, so that the lithium composite oxide particles not only tends to be deteriorated in thermal stability but also tends to fail to exhibit a suppressed surface activity, and therefore tends to be hardly improved in cycle performance or durability under high-voltage condition.

Also, as described in the aforementioned Patent Literatures 1 and 5, in the method in which after producing the lithium composite oxide particles, Zr is added onto a surface of the lithium composite oxide particles, and then the resulting particles are subjected to heat treatment at a temperature of not higher than 500°C, it is not possible to form Li₂ZrO₃ capable of exhibiting a sufficient effect as the Zr compound. Therefore, the effect of addition of the Zr compound cannot be expected.

### MEAN FOR SOLVING THE PROBLEM

The above technical task or object of the present invention can be achieved by the following aspects of the present invention.

That is, according to the present invention, there are provided lithium composite oxide particles comprising nickel, cobalt and manganese, in which a Zr compound is present on a surface of the lithium composite oxide particles, and represented by the chemical formula:

Liₓ(Zr_{1-y}A_{y})O_{z}

wherein x, y and z are 2.0 ≤ x ≤ 8.0; 0 ≤ y ≤ 1.0; and 2.0 ≤ z ≤ 6.0, respectively; and A is at least one element selected from the group consisting of Mg, Al, Ca, Ti, Y, Sn and Ce, and
a content of Zr in the lithium composite oxide particles is 0.05 to 1.0% by weight (Invention 1).

Also, according to the present invention, there are provided the lithium composite oxide particles as described in the above Invention 1, wherein primary particles of the Zr compound being present on the surface of the lithium composite oxide particles have an average particle diameter of not more than 2.0 *µ*m (Invention 2).

Also, according to the present invention, there are provided the lithium composite oxide particles as described in the above Invention 1, or 2, wherein in the chemical formula of the Zr compound being present on the surface of the lithium composite oxide particles, x is 2 (x = 2)

### (Invention 3).

In addition, according to the present invention, there is provided a process for producing the lithium composite oxide particles as described in any one of the above Inventions 1 to 3, comprising the steps of mixing nickel-cobalt-manganese-based compound particles with a zirconium compound and a lithium compound, and then calcining the resulting mixture, in which behaving particles of the nickel-cobalt-manganese-based compound particles have an average particle diameter of 1.0 to 25.0 *µ*m (Invention 4).

Also, according to the present invention, there is provided the process for producing the lithium composite oxide particles as described in the above Invention 4, wherein behaving particles of the zirconium compound are constituted of zirconium oxide having an average particle diameter of not more than 4.0 *µ*m (Invention 5).

Further, according to the present invention, there is provided a non-aqueous electrolyte secondary battery using the lithium composite oxide particles as described in any one of the above Inventions 1 to 3 as a positive electrode active substance or as a part thereof (Invention 6).

### EFFECT OF THE INVENTION

The lithium composite oxide particles according to the present invention can provide a non-aqueous electrolyte secondary battery that has a low electric resistance at a high temperature and is excellent in cycle performance at a high temperature as well as high-temperature rate performance, and therefore can be suitably used as a positive electrode active substance for non-aqueous electrolyte secondary batteries.

### BRIEF DESCRIPTION OF DRAWINGS

FIG. 1 is an SEM image of lithium composite oxide particles obtained in Example 1.
FIG. 2 is a view of Zr mapping corresponding to the SEM image (FIG. 1) of the lithium composite oxide particles obtained in Example 1.

### PREFERRED EMBODIMENTS FOR CARRYING OUT THE INVENTION

The construction of the present invention is described in more detail below.

First, the lithium composite oxide particles according to the present invention are described.

In the lithium composite oxide particles according to the present invention, a Zr compound is allowed to be present on a surface of the respective lithium composite oxide particles comprising an Li(Ni, Co, Mn)O₂ compound as a main component. By allowing the Zr compound on the surface of the respective lithium composite oxide particles, when using the lithium composite oxide particles as a positive electrode active substance for secondary batteries, it is possible to obtain a secondary battery having a low electric resistance at a high temperature which is excellent in cycle performance and rate performance at a high temperature.

The Zr compound that is allowed to be present on the surface of the respective particles is represented by the chemical formula:

Liₓ(Zr_{1-y}A_{y})O_{z}

wherein x, y and z are 2.0 ≤ x ≤ 8.0; 0 ≤ y ≤ 1.0; and 2.0 ≤ z ≤ 6.0, respectively.

When x, y and z are out of the above-specified range, the surface modifying effect of the Zr compound tends to be insufficient. As the Zr compound, there are preferably used those compounds represented by Li₂ZrO₃ (space group: C2/c), Li₆Zr₂O₇, Li₄ZrO₄ and Li₈ZrO₆. Of these Zr compounds, more preferred is Li₂ZrO₃ in which x of the above chemical formula is 2.

The Zr compound that is allowed to be present on the surface of the respective particles may also comprise an element A that is at least one element selected from the group consisting of Mg, Al, Ca, Ti, Y, Sn and Ce. By incorporating the element A in the Zr compound, the resulting battery can be enhanced in cycle performance.

The Zr content of the Zr compound used in the lithium composite oxide particles according to the present invention is 0.05 to 1.0% by weight based on a total weight of the particles. When the Zr content is less than 0.05% by weight, the resulting battery tends to be hardly improved in cycle characteristic. When the Zr content is more than 1.0% by weight, the resulting battery tends to be decreased in initial discharge capacity. The Zr content of the Zr compound used in the lithium composite oxide particles is preferably 0.05 to 0.8% by weight.

The average particle diameter of primary particles of the Zr compound being present on the surface of the respective particles is preferably not more than 2.0 *µ*m. When the average particle diameter of primary particles of the Zr compound is more than 2.0 *µ*m, the surface modifying effect may be insufficient. The average particle diameter of primary particles of the Zr compound is more preferably 0.1 to 1.5 *µ*m.

In the lithium composite oxide particles according to the present invention, the compositional ratio of nickel, cobalt and manganese therein is controlled such that when a molar ratio (mol%) of Ni:Co:Mn in the particles is expressed by (a):(b):(c), (a) is preferably 5 to 65 mol%, (b) is preferably 5 to 65 mol%, and (c) is preferably 5 to 55 mol% (with the proviso that a sum of (a), (b) and (c) is 100 mol% ((a) + (b) + (c) = 100 mol%)). When the composition of the lithium composite oxide particles is out of the above-specified range, it may be difficult to obtain a totally well-balanced condition between price of raw materials, production method upon formation of lithium composite oxide, physical properties, battery performance, and the like, so that any of the above items are deviated from preferred ranges thereof, resulting in ill-balanced condition therebetween. The compositional ratios of the lithium composite oxide particles are more preferably controlled such that when a molar ratio (mol%) of Ni:Co:Mn in the particles is expressed by (a):(b):(c), (a) is 5 to 60 mol%, (b) is 5 to 55 mol%, and (c) is 5 to 35 mol%, and still more preferably controlled such that (a) is 5 to 55 mol%, (b) is 5 to 55 mol%, and (c) is 5 to 35 mol%.

The molar ratio Li to total moles of metal elements (Ni, Co, Mn and different kinds of metal elements) in the lithium composite oxide particles according to the present invention is preferably 1.00 to 1.20. When the molar ratio is less than 1.00, the resulting battery tends to be deteriorated in battery capacity to a corresponding extent. When the molar ratio is more than 1.20, a surplus amount of Li that has no contribution to battery capacity tends to be merely increased, so that the battery capacity per weight and per volume tends to be reduced.

Meanwhile, at least one element selected from the group consisting of F, Mg, Al, P, Ca, Ti, Y, Sn, Bi and Ce (hereinafter referred to as "other elements") may be incorporated to an inside of the lithium composite oxide particles such that the molar ratio of the other elements is 0.05 to 5.0 mol% based on total moles of metal elements (Ni, Co, Mn and other metal elements) in the nickel-cobalt-manganese-based compound particles.

The average particle diameter (D50) of behaving particles of the lithium composite oxide particles according to the present invention is preferably 1.0 to 25.0 *µ*m. When the average particle diameter (D50) of behaving particles of the lithium composite oxide particles is less than 1 *µ*m, the resulting particles tend to be deteriorated in packing density and safety. When the average particle diameter (D50) of behaving particles of the lithium composite oxide particles is more than 25.0 *µ*m, it may be difficult to industrially produce such particles. The average particle diameter (D50) of behaving particles of the lithium composite oxide particles is more preferably 3.0 to 15.0 *µ*m, and still more preferably 4.0 to 12.0 *µ*m.

The lithium composite oxide particles according to the present invention preferably have a BET specific surface area not more than 1.0 m²/g. When the BET specific surface area of the lithium composite oxide particles is more than 1.0 m²/g, the resulting particles tend to be decreased in packing density and increased in reactivity with an electrolyte solution, and these tendency is not preferred as battery.

The lithium composite oxide particles according to the present invention preferably have an electrical resistivity (Ω·cm) of 1.0 x 10⁴ to 1.0 x 10⁷ Ω·cm. When the electrical resistivity of the lithium composite oxide particles is more than 1.0 x 10⁷ Ω·cm, the particles tend to have an excessively high electric resistance as a positive electrode material for batteries, so that the resulting battery tends to decrease in battery characteristics such as reduced voltage. Since the particles are in the form of an oxide, it is hardly considered that the particles have an electrical resistivity of less than 1.0 x 10⁴ Ω·cm. Meanwhile, the electrical resistivity of the lithium composite oxide particles is a volumetric resistivity (Ω·cm) which is measured by applying a pressure of 50 MPa to 8.00 g of a sample filled in a metal mold having a diameter of 20 mmφ.

Next, the process for producing the lithium composite oxide particles according to the present invention is described.

In the present invention, the nickel-cobalt-manganese-based compound particles are previously prepared, and the thus prepared nickel-cobalt-manganese-based compound particles are mixed with a lithium compound and a zirconium compound and calcined to produce the aimed particles. Meanwhile, in order to allow the Zr compound defined by the chemical formula: Liₓ(Zr_{1-y}A_{y})O_{z} wherein x, y and z are 2.0 ≤ x ≤ 8.0; 0 ≤ y ≤ 1.0; and 2.0 ≤ z ≤ 6.0, respectively, to be present on the surface of the particles, it is necessary that the nickel-cobalt-manganese-based compound particles are mixed and calcined together with the lithium compound and the zirconium compound. If these compounds are separately mixed and calcined, the aimed Zr compound is not produced (refer to the below-mentioned Comparative Example 4).

The method of producing the nickel-cobalt-manganese-based compound particles is not particularly limited. For example, a solution comprising a metal salt comprising nickel, cobalt and manganese and an alkaline solution are added dropwise at the same time to conduct a neutralization reaction and a precipitation reaction thereof, thereby obtaining a reaction slurry comprising the nickel-cobalt-manganese-based compound particles. The thus obtained reaction slurry is subjected to filtration and washed with water, and optionally dried, to obtain the nickel-cobalt-manganese-based compound particles (in the form of a hydroxide, an oxyhydroxide or a mixture thereof).

The other elements such as Mg, Al, Ti, Si, etc., may also be added in a trace amount to the lithium composite oxide particles, if required. In this case, the other elements may be added by any of a method of previously mixing the other elements with nickel, cobalt and manganate, a method of adding the other elements together with nickel, cobalt and manganate at the same time, and a method of adding the other elements to a reaction solution in the course of the reaction.

The lithium composite oxide particles according to the present invention may be produced by mixing the nickel-cobalt-manganese-based compound particles with the zirconium compound and the lithium compound, and then calcining the resulting mixture. The average particle size of behaving particles of the nickel-cobalt-manganese-based compound particles is preferably about 1.0 to about 25.0 *µ*m.

When the average particle size of behaving particles of the nickel-cobalt-manganese-based compound particles is less than 1 *µ*m, the obtained particles tend to be not only deteriorated in packing density, but also readily reacted with the zirconium compound added later, so that zirconium tends to be diffused up to an inside of the particles and therefore the effect of addition thereof cannot be expected, which tends to be undesirable from the viewpoint of inherent battery capacity. It may be difficult to industrially produce the nickel-cobalt-manganese-based compound particles having an average particle size of behaving particles of more than 25.0 *µ*m.

In addition, the zirconium compound is preferably zirconium oxide whose behaving particles have an average particle size of not more than 4.0 *µ*m.

When the average particle size of behaving particles of the zirconium compound is more than 4.0 *µ*m, the zirconium compound tends to remain unreacted or tends to be produced independent of the lithium composite oxide particles, so that the effect of modifying a surface of the lithium composite oxide tends to be insufficient. The average particle size of behaving particles of the zirconium compound is more preferably 0.1 to 2.0 *µ*m.

The zirconium compound may be added to the nickel-cobalt-manganese-based compound particles in such an amount that the molar ratio of Zr is 0.3 to 1.5 mol% based on total moles of the metal elements (Ni, Co, Mn and other elements) in the nickel-cobalt-manganese-based compound particles.

When the Liₓ(Zr_{1-y}A_{y})O_{z} comprising the element A as at least one element selected from the group consisting of Mg, Al, Ca, Ti, Y, Sn and Ce is allowed to be present on the surface of the lithium composite oxide particles, the compound of the above element A may be added and mixed together with the zirconium raw material to the nickel-cobalt-manganese-based compound particles.

The mixing ratio of lithium is preferably 1.00 to 1.20 based on total moles of the metal elements (Ni, Co, Mn and other elements) in the nickel-cobalt-manganese-based compound particles.

The calcination temperature is preferably not lower than 900°C. When the calcination temperature is lower than 900°C, it may be difficult to obtain the aimed lithium composite oxide of a layer rock-salt structure having a good crystallinity, or it may be difficult to sufficiently exhibit battery characteristics such as charge/discharge capacities due to incomplete incorporation of lithium itself when producing a lithium ion battery using the resulting particles. The atmosphere upon the calcination is preferably an oxidative gas atmosphere. The reaction time is preferably 5 to 30 hr.

Next, the positive electrode produced using the positive electrode active substance comprising the lithium composite oxide particles according to the present invention is described.

When producing the positive electrode using the positive electrode active substance comprising the lithium composite oxide particles according to the present invention, a conductive agent and a binder are added to and mixed with the lithium composite oxide particles by an ordinary method. Examples of the preferred conductive agent include acetylene black, carbon black and graphite. Examples of the preferred binder include polytetrafluoroethylene and polyvinylidene fluoride.

Meanwhile, when producing the positive electrode, two or more kinds of the lithium composite oxide particles according to the present invention which are different in average particle size (D50) of behaving particles from each other may be used in combination with each other.

The secondary battery produced by using the lithium composite oxide particles according to the present invention comprises the above positive electrode, a negative electrode and an electrolyte.

Examples of a negative electrode active substance which may be used for production of the negative electrode include lithium metal, lithium/aluminum alloys, lithium/tin alloys, and graphite or black lead.

Also, as a solvent for the electrolyte solution, there may be used combination of ethylene carbonate and diethyl carbonate, as well as an organic solvent comprising at least one compound selected from the group consisting of carbonates such as propylene carbonate and dimethyl carbonate, and ethers such as dimethoxyethane.

Further, as the electrolyte, there may be used a solution prepared by dissolving, in addition to lithium phosphate hexafluoride, at least one lithium salt selected from the group consisting of lithium perchlorate and lithium borate tetrafluoride in the above solvent.

The secondary battery produced using the positive electrode active substance according to the present invention has an initial discharge capacity of 150 to 170 mAh/g, and a rate characteristic (high-load capacity retention rate) of not less than 95% and a cycle performance (cycle capacity retention rate) of not less than 85% as measured by the below-mentioned evaluation methods.

### <Function>

The important point of the present invention could show the following effects. That is, by allowing the Zr compound comprising Liₓ(Zr_{1-y}A_{y})O_{z} to be present on the surface of the lithium composite oxide particles, in the case where the lithium composite oxide particles is used as a positive electrode active substance for secondary batteries, it is possible to obtain a secondary battery that has a low electric resistance at a high temperature, and is excellent in cycle performance and rate characteristic at a high temperature.

The reason why the lithium composite oxide particles according to the present invention can exhibit excellent properties as a positive electrode active substance for secondary batteries is considered by the present inventors as follows. That is, it is considered that by allowing the above Zr compound to be present on the surface of the lithium composite oxide particles, it is possible to suppress a surface activity of the lithium composite oxide without any damage to electrochemical properties of the lithium composite oxide.

More specifically, the mechanism of attaining the effect by the Zr compound (Li₂ZrO₃) is considered by the present inventors as follows, although not fully clearly determined yet. That is, in lithium ion secondary batteries, fluorine-containing compounds are usually used as an additive for an electrolyte solution and a positive electrode. It is considered that during charge and discharge operations of lithium ion battery, these fluorine compounds generate HF in the electrolyte solution, and the thus generated HF causes elution of Mn from the lithium composite oxide, or promotes precipitation of solid electrolyte interface (SEI) on the anode, finally which results the deterioration of battery performance. However, it is considered that the HF generated in the electrolyte solution is captured by any action of the Zr compound (Li₂ZrO₃) or the like.

Meanwhile, it is considered by the present inventors that in the case where the Zr compound is allowed to be present not on the surface of the lithium composite oxide particles but inside of the lithium composite oxide particles, since Zr is not substituted inside of a crystal structure of the lithium composite oxide particles, the resulting lithium composite oxide particles tend to have a low crystallinity, which results in not only deterioration in thermal stability but also less suppression of a surface activity thereof, so that the obtained battery tends to be hardly improved in cycle performance and durability at a high voltage.

### EXAMPLES

Typical examples of the present invention are described as follows.

The average particle diameter (D50) of the behaving particles was a volume-based average particle diameter measured by a wet laser method using a laser type particle size distribution measuring apparatus "MICROTRACK HRA" manufactured by Nikkiso Co., Ltd.

Meanwhile, sodium hexametaphosphate was added to the sample and subjected to ultrasonic dispersion, and the resulting dispersion was then subjected to the above measurement.

The primary particle size was expressed by an average value read out from an SEM image of the particles.

The conditions of presence of the coating or existing particles were observed using a scanning electron microscope "SEM-EDX" equipped with an energy disperse type X-ray analyzer (manufactured by Hitachi High-Technologies Corp.).

The identification of the sample was conducted using a powder X-ray diffractometer (manufactured by RIGAKU Corp.; Cu-Kα; 40 kV; 40 mA). Also, the crystal phase of the Zr compound was identified in the same manner as described above.

The specific surface area of the particles was measured by BET method using "Macsorb HM model-1208" manufactured by Mountech Co., Ltd.

The electrical resistivity of the particles was measured using a powder resistivity measuring system (Loresta) as a resistance value obtained when applying a pressure of 50 MPa to 8.00 g of a sample filled in a metal mold having a diameter of 20 mmφ, and expressed by a volume resistivity (Ω·cm).

Battery characteristics of the positive electrode active substance were evaluated as follows. That is, the positive electrode, negative electrode and electrolyte solution were prepared by the following production method to produce a coin cell.

### <Construction of battery>

The coin cell used for evaluation of cycle characteristic was produced as follows. That is, 94% by weight of the lithium composite oxide particles as the positive electrode active substance particles according to the present invention, 0.5% by weight of ketjen black and 2.5% by weight of a graphite both serving as a conducting material and 3% by weight of polyvinylidene fluoride were charged in N-methyl pyrrolidone as a solvent and kneaded with each other, and the resulting mixture was applied onto an Al metal foil and then dried at 120°C. The thus obtained sheets were blanked into 14 mmφ and then compression-bonded to each other under a pressure of 3 t/cm², thereby producing a positive electrode.

A counter electrode was produced as follows. That is, 94% by weight of graphite as a negative electrode active substance, 2% by weight of acetylene black as a conducting material, 2% by weight of carboxymethyl cellulose as a thickening agent, and 2% by weight of a styrene-butadiene rubber as a binder were charged in an aqueous solvent and kneaded with each other, and the resulting mixture was applied onto a Cu metal foil and then dried at 90°C. The thus obtained sheets were blanked into 16 mmφ and then compression-bonded to each other under a pressure of 3 t/cm², thereby producing a negative electrode.

Further, 1 mol/L LiPF₆ solution of mixed solvent comprising EC and DEC in a volume ratio of 1:2 was used as an electrolyte solution, thereby producing a coin cell of a 2032 type.

In the coin cell used for measuring charge/discharge characteristics, rate characteristic and D.C. resistance, there were prepared and used the above positive electrode having a size of 16 mmφ and a lithium foil as a negative electrode blanked into 18 mmφ.

### <Evaluation of battery>

The initial charge/discharge characteristics of the coin cell were measured as follow. That is, after charging the coin cell with a current density of 0.2C until reaching 4.3 V at room temperature, the coin cell was subjected to constant-voltage charging for 90 min, and discharged at a current density of 0.2C until reaching 3.0 V to measure an initial charge capacity, an initial discharge capacity and an initial efficiency at that time.

The rate characteristic of the coin cell was measured as follows. That is, the coin cell was subjected to measurement of a discharge capacity (a) at a temperature of each of 25°C and 60°C and a current density of 0.2C, and after charging again with 0.2C, the coin cell was subjected to measurement of a discharge capacity (b) with 5.0C to determine the rate characteristic thereof from the formula of (b)/(a) x 100(%).

In addition, the cycle characteristic of the coin cell was measured as follows. That is, the coin cell was subjected to charge/discharge cycles until reaching 301 cycles in total under the condition of a cut-off voltage between 2.5 V and 4.2 V at 60°C to determine a ratio of the 301st cycle discharge capacity relative to the initial charge/discharge. Meanwhile, with respect to the charge/discharge rates, the charge/discharge was repeated in an accelerated manner with a rate of 1.0C except that the charge/discharge with a rate of 0.1C was conducted every 100 cycles.

The D.C. resistance of the coin cell was measured as follows. That is, a pulse current corresponding to 1C was flowed through the coin cell from the condition of SOC 100% in the discharge direction at a temperature of each of -10°C and 60°C to calculate a resistance value from the change in voltage and the current value as measured at that time on the basis of Ohm's law.

The surface of the negative electrode after the cycle test was subjected to EDX analysis. That is, the coin cell was disassembled in a glove box filled with Ar to dismount the negative electrode from the cell. The negative electrode was washed with dimethyl carbonate to remove the electrolyte solution therefrom, and then subjected to vacuum deaeration to remove the dimethyl carbonate therefrom. The thus treated negative electrode was subjected to EDX analysis.

### Example 1:

An aqueous solution prepared by mixing 2 mol/L of nickel sulfate with cobalt sulfate and manganese sulfate at a mixing ratio of Ni:Co:Mn of 1:1:1, and a 5.0 mol/L ammonia aqueous solution were simultaneously fed to a reaction vessel. The contents of the reaction vessel were always kept stirred by a blade-type stirrer and, at the same time, the reaction vessel was automatically supplied with a 2 mol/L sodium hydroxide aqueous solution so as to control the pH of the contents in the reaction vessel to 11.5±0.5. The nickel-cobalt-manganese hydroxide produced in the reaction vessel was overflowed therefrom through an overflow pipe, and collected in a concentration vessel connected to the overflow pipe to concentrate the nickel-cobalt-manganese hydroxide. The concentrated nickel-cobalt-manganese hydroxide was circulated to the reaction vessel, and the reaction was continued for 40 hr until the concentration of the nickel-cobalt-manganese hydroxide in the reaction vessel and a precipitation vessel reached 4 mol/L.

After completion of the reaction, the resulting suspension was remove from the reaction vessel, washed with water using a filter press, and then dried, thereby obtaining nickel-cobalt-manganese hydroxide particles having a molar ratio of Ni:Co:Mn = 1:1:1 and an average secondary particle diameter (D50) of 10.3 *µ*m.

The thus obtained nickel-cobalt-manganese hydroxide particles, lithium carbonate and zirconium oxide were well mixed in predetermined amounts such that the molar ratio of lithium/(nickel + cobalt + manganese) was 1.05, and the molar ratio of zirconium/(nickel + cobalt + manganese + zirconium) was 0.01. The resulting mixture was calcined in atmospheric air at 950°C for 10 hr and then deaggregated.

As a result of ICP analysis of a chemical composition of the thus obtained calcination product, it was confirmed that the molar ratio of Ni:Co:Mn (mol%) was 33.01:33.71:33.28, and the molar ratio of Li to a sum of cobalt and manganese (lithium/(nickel + cobalt + manganese)) was 1.04. In addition, it was confirmed that the Zr content was 8400 ppm, and the resulting particles had an average particle diameter (D50) of 9.57 *µ*m and a BET specific surface area of 0.36 m²/g.

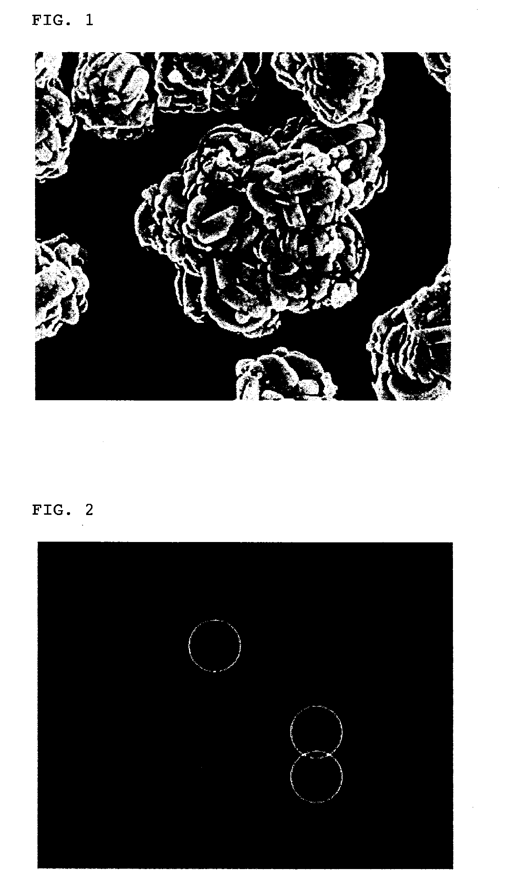

FIG. 1 shows an SEM micrograph of the resulting lithium composite oxide particles. FIG. 2 shows a micrograph of Zr mapping in the same field of view as that of FIG. 1. In FIG. 2, positions where Zr exists are observed as white colored. The circled portions shown in FIG. 1 are the same portions as shown in FIG. 2. It was confirmed that the compound being present on a surface of the particle shown in FIG. 1 was a compound comprising Zr, from FIG. 2. From FIGS. 1 and 2, it was confirmed that the Zr compound was localized on the surface of the respective particles.

On the other hand, from an X-ray diffraction pattern of the resulting lithium composite oxide particles, it was confirmed that a diffraction peak of Li₂ZrO₃ was observed together with a diffraction peak of an Li(NiCoMn)O₂-based compound.

The coin cell prepared using the above positive electrode active substance had an initial discharge capacity of 156.5 mAh/g, a rate characteristic of 74.2% and a cycle characteristic of 69.2%.

### Examples 2 to 5 and Comparative Examples 1 and 2:

The same procedure as in Example 1 was conducted except that the average particle diameters of the behaving particles of the nickel-cobalt-manganese hydroxide particles and the zirconium oxide as well as the Zr content were changed variously, thereby obtaining a positive electrode active substance comprising a lithium composite oxide.

The production conditions used above and various properties of the thus obtained positive electrode active substances are shown in Tables 1 and 2.

Meanwhile, the existing conditions and crystal structure of the Zr compound in the lithium composite oxide particles obtained in Examples 2 to 5 were determined in the same manner as used in Example 1. As a result, it was confirmed that Li₂ZrO₃ was present on the surface of the respective lithium composite oxide particles.

### Comparative Example 3:

In the synthesis of the precursor in Example 1, when mixing 2 mol/L of nickel sulfate with cobalt sulfate and manganese sulfate such that a molar ratio of Ni:Co:Mn was 1:1:1, zirconium sulfate was further added to the above compounds and mixed such that a molar ratio of Ni:Co:Mn:Zr was 33:33:33:1, and the resulting aqueous solution and a 5.0 mol/L ammonia aqueous solution were simultaneously fed to a reaction vessel. Successively, the reaction was conducted in the same manner as in Example, and the resulting reaction product was further subjected to drying treatment, thereby obtaining zirconium-containing nickel-cobalt-manganese hydroxide particles having a molar ratio of Ni:Co:Mn:Zr = 33:33:33:1 and an average secondary particle diameter (D50) of 10.3 *µ*m. Thereafter, the thus obtained zirconium-containing nickel-cobalt-manganese hydroxide particles and lithium carbonate were well mixed in predetermined amounts such that the molar ratio of lithium/(nickel + cobalt + manganese) was 1.05. The resulting mixture was calcined in atmospheric air at 950°C for 10 hr and then deaggregated.

Various properties of the thus obtained positive electrode active substance are shown in Tables 1 and 2.

From the SEM observation and X-ray diffraction pattern of the positive electrode active substance obtained in Comparative Example 3, it was confirmed that no Zr compound was present on the surface of the particles.

It is considered by the present inventors that in the case where the Zr compound is allowed to be present inside of the lithium composite oxide particles, since Zr is not substituted inside of a crystal structure of the lithium composite oxide particles, the lithium composite oxide particles tend to have a low crystallinity, resulting in not only deterioration in thermal stability but also less suppression of a surface activity thereof, so that the resulting battery tends to be hardly improved in cycle characteristic and durability at a high voltage.

### Comparative Example 4:

The synthesis and drying were conducted in the same manner as in Example 1, thereby obtaining nickel-cobalt-manganese hydroxide particles as a precursor. Successively, the thus obtained nickel-cobalt-manganese hydroxide particles and lithium carbonate were well mixed in predetermined amounts such that the molar ratio of lithium/(nickel + cobalt + manganese) was 1.05. The resulting mixture was calcined in atmospheric air at 950°C for 10 hr and then deaggregated. Zirconium oxide particles were well mixed in the resulting lithium composite oxide particles such that the molar ratio of Ni:Co:Mn:Zr was 33:33:33:1. The resulting mixture was calcined in atmospheric air at 500°C for 3 hr and then deaggregated.

Various properties of the thus obtained positive electrode active substance are shown in Tables 1 and 2.

From the SEM observation and X-ray diffraction pattern of the positive electrode active substance obtained in Comparative Example 4, it was confirmed that the Zr compound was present on the surface of the particles, and the Zr compound was a ZrO₂ compound.

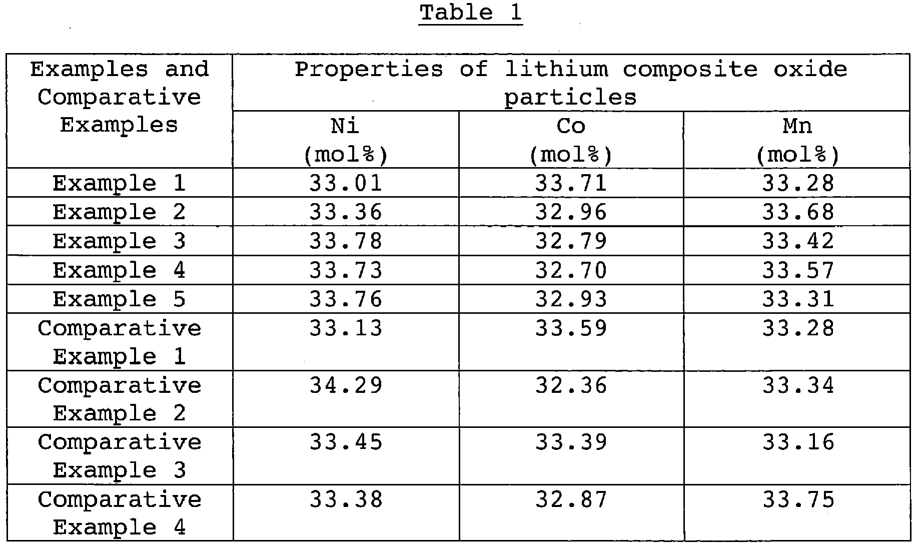

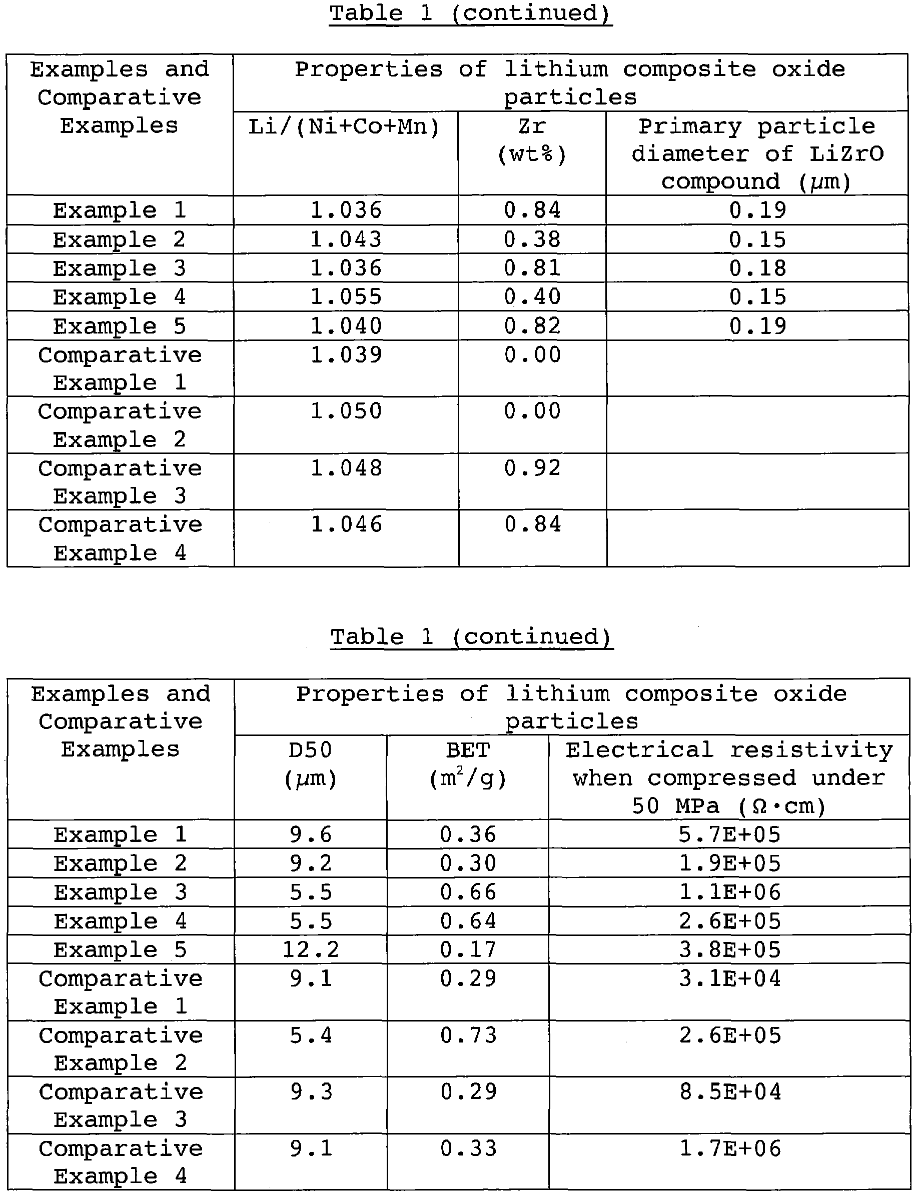

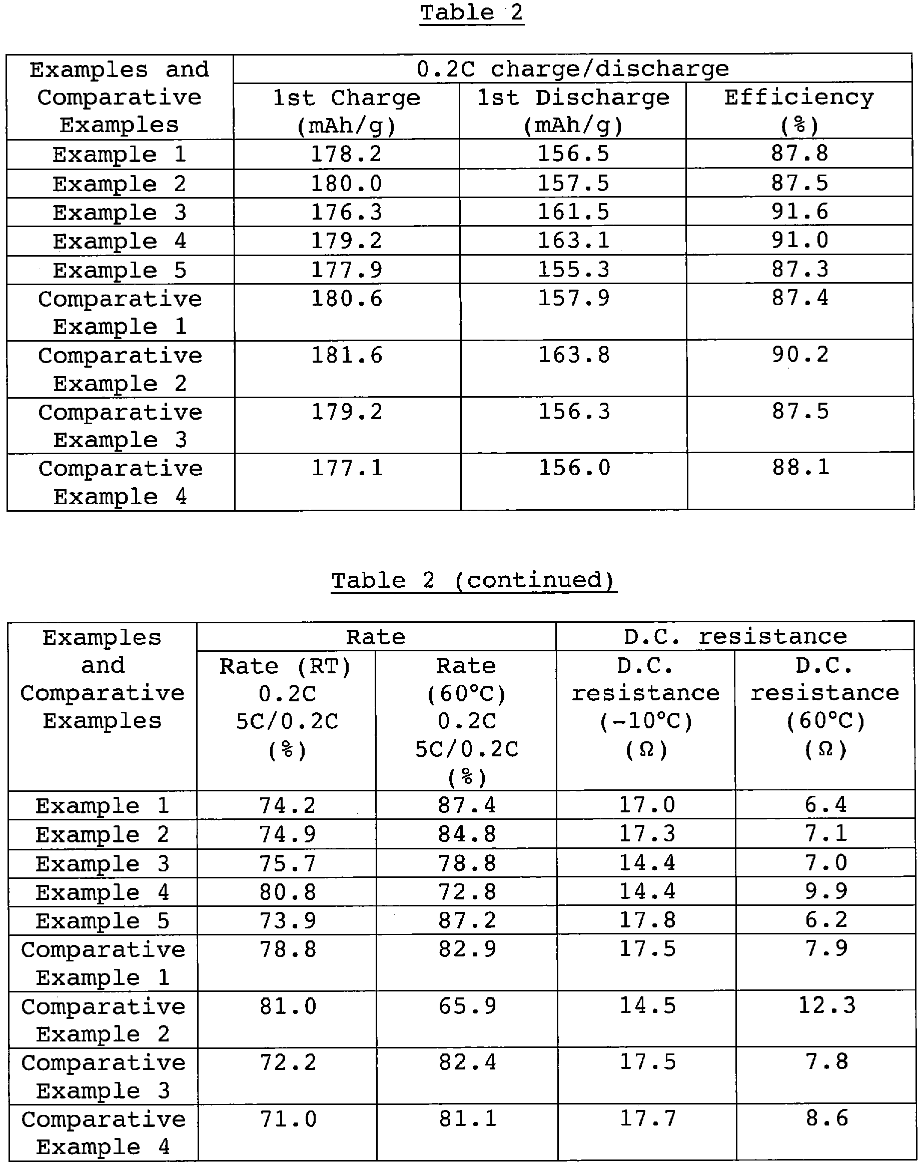

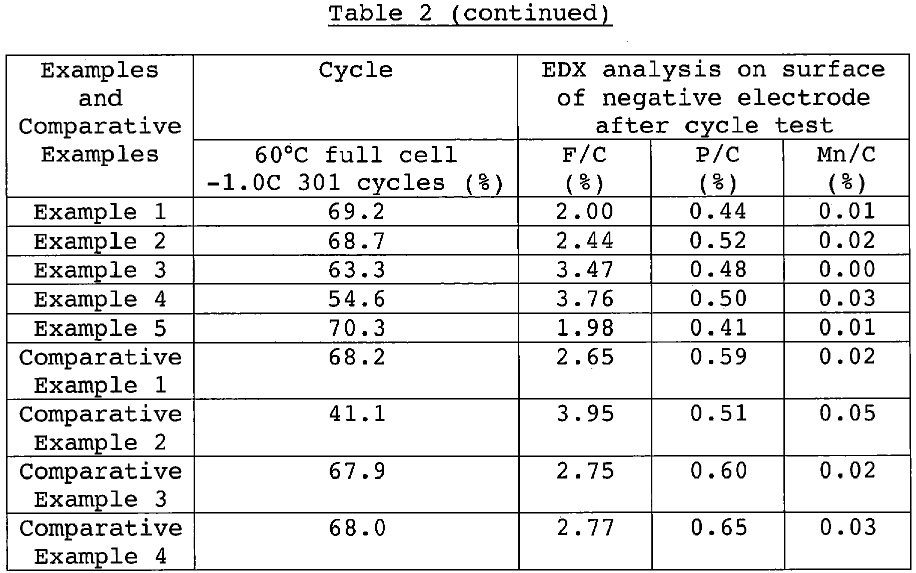

From the comparison between the Examples and Comparative Examples, it was recognized that the lithium composite oxide particles according to the present invention were capable of producing a non-aqueous electrolyte secondary battery that was excellent in cycle characteristic at a high temperature and high-temperature rate characteristic. More specifically, it was recognized that the particles obtained in Examples 1 and 2 were excellent in rate characteristic at 60°C and cycle characteristic at 60°C, and suffered from less deposition of F, P and Mn on the negative electrode even after the evaluation of cycle characteristic, as compared to the particles obtained in Comparative Examples 1, 3 and 4. In addition, it was apparently recognized that the particles obtained in Examples 3 and 4 had excellent properties as compared to the particles obtained in Comparative Example 2.

### INDUSTRIAL APPLICABILITY

The lithium composite oxide particles according to the present invention are excellent in load characteristic, cycle characteristic and thermal stability, and therefore can be suitably used as a positive electrode active substance for secondary batteries.

## Claims

1. Lithium composite oxide particles comprising nickel, cobalt and manganese, in which a Zr compound is present on a surface of the lithium composite oxide particles, and represented by the chemical formula:
Liₓ(Zr_{1-y}A_{y})O_{z}
wherein x, y and z are 2.0 ≤ x ≤ 8.0; 0 ≤ y ≤ 1.0; and 2.0 ≤ z ≤ 6.0, respectively; and A is at least one element selected from the group consisting of Mg, Al, Ca, Ti, Y, Sn and Ce, and
a content of Zr in the lithium composite oxide particles is 0.05 to 1.0% by weight.

2. The lithium composite oxide particles according to claim 1, wherein primary particles of the Zr compound being present on the surface of the lithium composite oxide particles have an average particle diameter of not more than 2.0 *µ*m.

3. The lithium composite oxide particles according to claim 1 or 2, wherein in the chemical formula of the Zr compound being present on the surface of the lithium composite oxide particles, x is 2 (x = 2).

4. A process for producing the lithium composite oxide particles as claimed in any one of claims 1 to 3, comprising the steps of mixing nickel-cobalt-manganese-based compound particles with a zirconium compound and a lithium compound, and then calcining the resulting mixture, in which behaving particles of the nickel-cobalt-manganese-based compound particles have an average particle diameter of 1.0 to 25.0 *µ*m.

5. The process for producing the lithium composite oxide particles according to claim 4, wherein behaving particles of the zirconium compound are constituted of zirconium oxide having an average particle diameter of not more than 4.0 *µ*m.

6. A non-aqueous electrolyte secondary battery using the lithium composite oxide particles as claimed in any one of claims 1 to 3 as a positive electrode active substance or as a part thereof.
